# EUROPÄISCHE PATENTSCHRIFT

(11) **EP 0 752 210 B1**
(45) Veröffentlichungstag und Bekanntmachung des Hinweises auf die Patenterteilung: **22.12.1999**
(21) Anmeldenummer: 96890110.8
(22) Anmeldetag: 21.06.1996
(51) Int. Cl.: A21B 5/02, A21C 15/02

(54) **Mehrteilige Backform und Verfahren zur Herstellung eines Backerzeugnisses**
Composite pastry mould and baked goods production process
Moule à pâtisserie à plusieurs parties et procédé de production de pâtisserie

(30) Priorität: 07.07.1995 AT 115895
(43) Veröffentlichungstag der Anmeldung: 08.01.1997
(73) Patentinhaber: HAAS, Nada, A-1010 Wien (AT)
(72) Erfinder: HAAS, Nada, A-1010 Wien (AT)
(74) Vertreter: Berger, Erhard, Dr.

(56) Entgegenhaltungen:
- WO-A-95/00023
- US-A- 1 379 987
- US-A- 4 417 867

## Beschreibung

Die Erfindung betrifft eine mehrteilige Backform zur Herstellung einer eßbaren Tüte, insbesondere Eistüte, eines Bechers oder Tellers oder dergleichen aus einer Waffelteigmasse oder einer Teig- bzw. Backmasse auf Stärkebasis mit einem vorzugsweise aus zwei Hälften bestehenden Form-Unterteil mit einer wenigstens teilweise konischen oder pyramidenstumpfförmige Ausnehmung entsprechend der Außenkontur der Tüte, insbesondere Eistüte, des Bechers oder Tellers oder dergleichen und mit einem an einer Formplatte vorgesehenen, in die Ausnehmung des Form-Unterteiles einführbaren wenigstens teilweise konischen oder pyramidenstumpfförmigen Formkern, entsprechend der Innenkontur der Tüte, insbesondere Eistüte, des Bechers oder Tellers.

Die industrielle Herstellung von Tüten, insbesondere Eistüten, Eisbechern oder eßbaren bzw. als Futtermittel oder Futtermittelbeigabe verwendbaren bzw. biologisch leicht abbaubaren Bechern, Tellern, Schalen, Tassen od.dgl. erfolgt mit Hilfe von vollautomatischen Maschinen, welche mehrteilige Backformen enthalten. Die meist aus zwei Hälften zusammengesetzten Form-Unterteile werden mit der Teig- bzw. Backmasse befüllt, ein Formkern taucht ein und verdrängt die Teig- bzw. Backmasse in den zwischen dem Form-Unterteil und dem Formkern bestehenden Spalt, der die Wandstärke z.B. der Eistüte bestimmt. Zugleich erfolgt der Backvorgang durch die erhitzte Backform und weitere Wärmezufuhr.

Aus der US-PS 1 438 541 ist eine solche Backform ersichtlich. Man erkennt, daß beim Eintauchen des kegelförmigen Kernes auf Grund der Geometrie koaxialer Kegel im Bereich der Spitze ein größeres Teigvolumen vorhanden ist, als im Bereich des Kegelmantels. Zur Erzielung eines gleichmäßigen, homogenen Backergebnisses ist es wünschenswert, wenn die Wandstärke einschließlich des Spitzenbereiches der Eistüte oder des Bodenbereiches eines konischen Behälters möglichst nicht unterschiedlich ist. Dieser Grundsatz gilt nicht nur für das Endprodukt, sondern auch für die Zwischenstufen, wenn etwa ein Backvorgang bereits während des langsamen Einführens des Formkernes in einer Vorbackphase erfolgt und der Formkern somit ein vorerst dickwandiges Zwischenprodukt begrenzt und dieses sodann in einer Fertigbackphase langsam oder schlagartig verdichtet.

Die Erfindung zielt somit darauf ab, bei der Herstellung von Tüten, insbesondere Eistüten, Bechern oder Tellern während des Backvorganges eine Teigkonzentration im Spitzenbereich oder Bodenbereich der Form zu vermeiden. Eine solche Teigkonzentration ergibt sich nicht nur bei kegelförmigen Tüten, sondern auch bei kegelstumpfförmigen Bechern, Tassen oder Tellern. Wenn der Formkern in seiner Endlage in dem Form-Unterteil auch eine überall konstante Wandstärke - bei Bechern, Tassen oder Tellern, auch eine der Wandstärke entsprechende Bodenstärke - bewirkt, so trifft dies in den Positionen des Kernes vor Erreichen seiner Endstellung nicht zu. Spitzen- und Bodenbereiche konischer Behältnisse fassen überproportional größere Volumina als die schrägen Wandbereiche. Wenn aber der Backvorgang bereits vor Erreichen der Endposition des Kernes im Form-Unterteil beginnt, dann muß schon teilweise stabilisierte Masse in weiterer Folge noch aus dem Spitzenbereich oder Bodenbereich verdrängt oder derart komprimiert werden, daß sich gegenüber den Wandteilen zu harte Bereiche ergeben. Dies wirkt sich auch in den technologischen Eigenschaften, insbesondere der Zähigkeit und Sprödigkeit des Ergebnisses und im optischen Eindruck, insbesondere der Farbe des ausgebackenen Endproduktes, ungünstig aus. Die unerwünschte Volumenskonzentration umfaßt Teigmengen mit einer hohen Wasserkonzentration, die nach dem Vorbacken und Verdichten entweichen und dabei die bestehenden Wandstrukturen teilweise zerstören. Zur Vermeidung der genannten Nachteile ist eine mehrteilige Backform der eingangs beschriebenen Art dadurch gekennzeichnet, daß der Formkern mindestens einen Stirnteil umfaßt, der aus einem Führungsteil des Formkernes zur Veränderung der Wandstärke im Spitzen- bzw. Bodenbereich während des Back- oder Trocknungsvorganges teleskopartig ausschiebbar und einschiebbar ist. Dabei ist es zweckmäßig, wenn an den Stirnteil des Formkernes ein Schaft anschließt, der in einer insbesondere zentralen Bohrung oder Ausnehmung des Führungsteiles des Formkernes verschiebbar gelagert ist. Zur Herstellung von Tüten ist es zweckmäßig, wenn der Formkern quer zu seiner Mittelachse zweigeteilt ist und einen konischen Stirnteil, beispielsweise mit der konischen Spitze der Tüte, insbesondere Eistüte, umfaßt, daß der konische Stirnteil aus einem an seiner Mantelfläche konischen Führungsteil ausschiebbar ist und daß an den konischen Stirnteil der Schaft anschließt, der in einer zentralen Bohrung oder Ausnehmung des Führungsteiles verschiebbar gelagert ist. Dadurch ist es möglich, den Formkern während des Einführens in den Formunterteil in Zwischenstellungen in welchen vorgebacken wird, durch Ausschieben des Stirnteiles gewissermaßen zu verlängern und somit ringsum eine annähernd gleiche Wandstärke in jeder Phase des Einführens des Formkernes zu bewirken. Das Ausschieben bzw. Zurückziehen des Stirnteiles kann zwangsgesteuert z.B. über eine Kulissenführung während der Einschubbewegung des Formkernes erfolgen. Es ist jedoch zweckmäßig, wenn der Schaft im Anschluß an den Stirnteil zwischen zwei Anschlägen verschiebbar ist, wobei der eine Anschlag das Einschieben des Stirnteiles gegen die Kraft einer Feder in der Position begrenzt, in welcher die Mantelfläche des Stirnteiles mit der Mantelfläche des Führungsteiles fluchtet und der andere Anschlag eine unter Federkraft über die fluchtende Lage der Mantelflächen des Führungsteiles vortretende Lage des Stirnteiles begrenzt. Bei einer konkreten Ausführungsform ist vorgesehen, daß die Kraft der den Stirnteil in der ausgeschobenen Stellung vorspannenden Feder geringer ist, als die Strukturfestigkeit der Teig- bzw. Backmasse im vorgebackenen Zustand, jedoch aber größer ist als der Dampfdruck der Teig- bzw. Backmasse, der auf die Mantelfläche des konischen Stirnteiles wirkt. Unter der Strukturfestigkeit ist hier jene Kraft zu verstehen, die die Teig- bzw. Backmasse der Federkraft entgegensetzt. Es ist klar, daß eine erst kurz angebackene Teig- bzw. Backmasse durch höheren Feuchtigkeitsgehalt eine geringere Strukturfestigkeit aufweist, als eine annähernd ausgebackene. Eine alternative Ausführungsform ist dadurch gekennzeichnet, daß die Kraft der den Stirnteil in der ausgeschobenen Stellung vorspannenden Feder geringer ist, als die Strukturfestigkeit der Teig- bzw. Backmasse im gebackenen bzw. vorgebackenen Zustand und auch geringer ist, als der Dampfdruck der Teig- bzw. Backmasse, der auf den Stirnteil wirkt. Ist die Federkraft größer als der Dampfdruck, dann wird der Stirnteil erst beim Einschieben des Kernes in die Endstellung durch die Strukturfestigkeit der Teig; oder Backmasse zurückgeschoben. Ist aber die Federkraft kleiner als der Dampfdruck, dann erfolgt dieses Zurückschieben des Stirnteiles unabhängig von der Endposition des Kernes schon in der Backphase bei entsprechender Dampfentwicklung. Wenn der Dampfdruck wieder abnimmt, weil etwa bereits ein wesentlicher Teil des Wassergehaltes der Backmischung verdampft ist, dann fährt der Stirnteil gegen das Backerzeugnis aus und komprimiert dieses, wobei die Strukturfestigkeit die Ausschiebbewegung begrenzt.

Um ein ideales Backergebnis zu erreichen, also eine gleichmäßig getönte Oberfläche und insbesondere ein Produkt, das Feuchtigkeit nur in so geringen Mengen aufnimmt, daß es sich nicht merklich erweicht, sondern knusprig, nicht aber gläsern zerbrechlich wird, wurde ein Verfahren entwickelt, bei welchem wesentliche Phasen des Backvorganges nicht in der Endlage der Formteile der mehrteiligen Backform erfolgen. Das Verfahren ist dadurch gekennzeichnet, daß die Teig- bzw. Backmasse in den Form-Unterteil eingebracht, durch intermittierendes Ein- und Ausfahren des Formkernes ("Wippen") vorverteilt und etwa bei der eineinhalb bis dreifachen Wandstärke der Tüte, insbesondere Eistüte, des Bechers oder Tellers bei aus dem Führungsteil ausgeschobenem Stirnteil bis zum Erreichen der Strukturstabilität vorgebacken wird und daß dann der Formkern bis zur endgültigen Wandstärke der Eistüte, des Bechers oder Tellers in den Form-Unterteil eingeschoben und der Stirnteil in die eingezogene Stellung zurückgeschoben wird, in der seine Mantelfläche mit jener des Führungsteiles fluchtet und schließlich das Fertigbacken erfolgt. Das Wippen zum Zweck der Vorverteilung und der Vorverdampfung des Wassergehaltes im Teig ist in der AT-PS 240 309 beschrieben, wobei die Backform während des Wippens bei dem genannten Stand der Technik offen ist, sodaß Dampf ungehindert entweichen kann.

Der Backvorgang bei vergrößerter Wandstärke erfolgt bei ausgeschobenem Stirnteil, wodurch das Teigvolumen im Spitz-bzw. Bodenbereich reduziert wird. Dort ergibt sich eine Wandstärke, die kleiner als der Abstand des Führungsteiles von dem Form-Unterteil ist. Wird schließlich auf die endgültige Wandstärke verdichtet, dann hat die Teig- bzw. Backmasse bereits eine solche Strukturfestigkeit erreicht, daß der Stirnteil beim Vorschieben des gesamten Kernes zurückweicht, also gegen die Kraft seiner Feder bis zur bündigen Lage mit der übrigen Kernmantelfläche eingeschoben wird. Die erste Phase des Backvorganges, nämlich das Vorbacken im Anschluß an ein eventuelles Wippen, kann je nach Rezeptur und verwendeten Rohstoffen etwa 20 bis 100 Sekunden, die zweite Phase, nämlich das Fertigbacken, kann bis zu 120 Sekunden in Anspruch nehmen. Bei einer Masse auf Stärkebasis wird oftmals statt von einem Backvorgang von einem Trocknungsvorgang der Masse in der Form gesprochen.

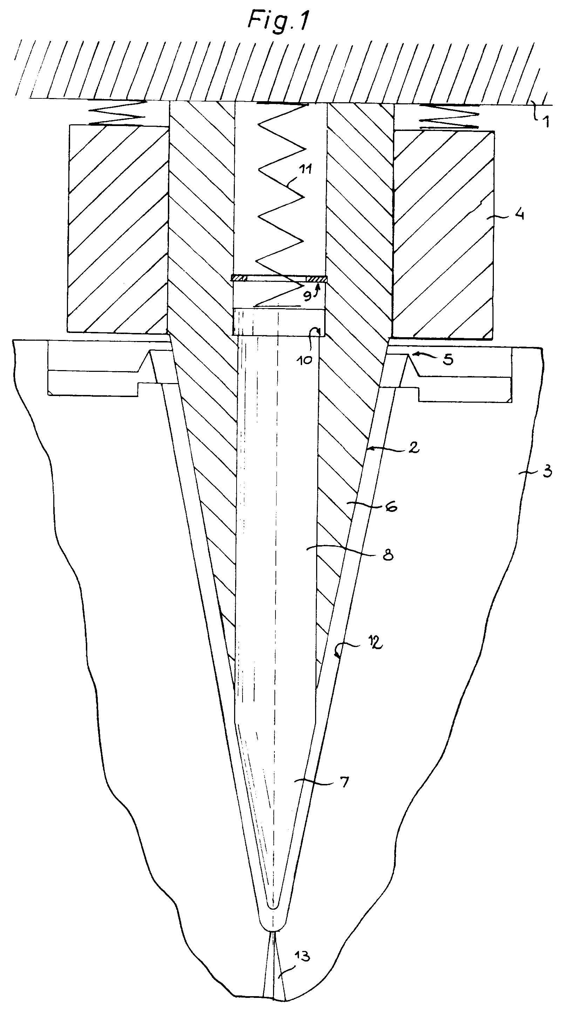

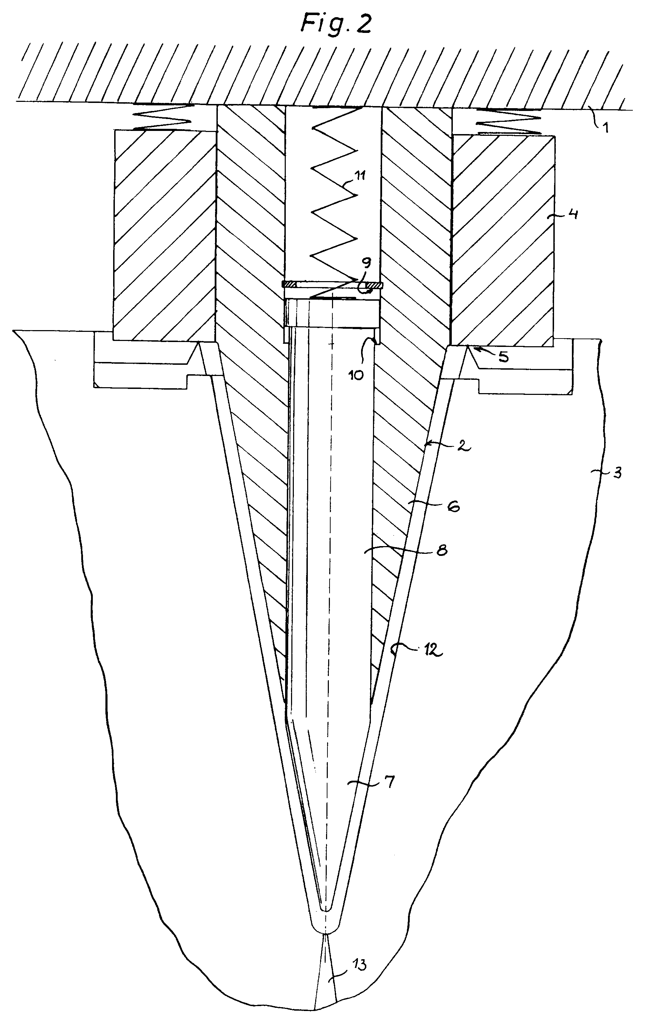

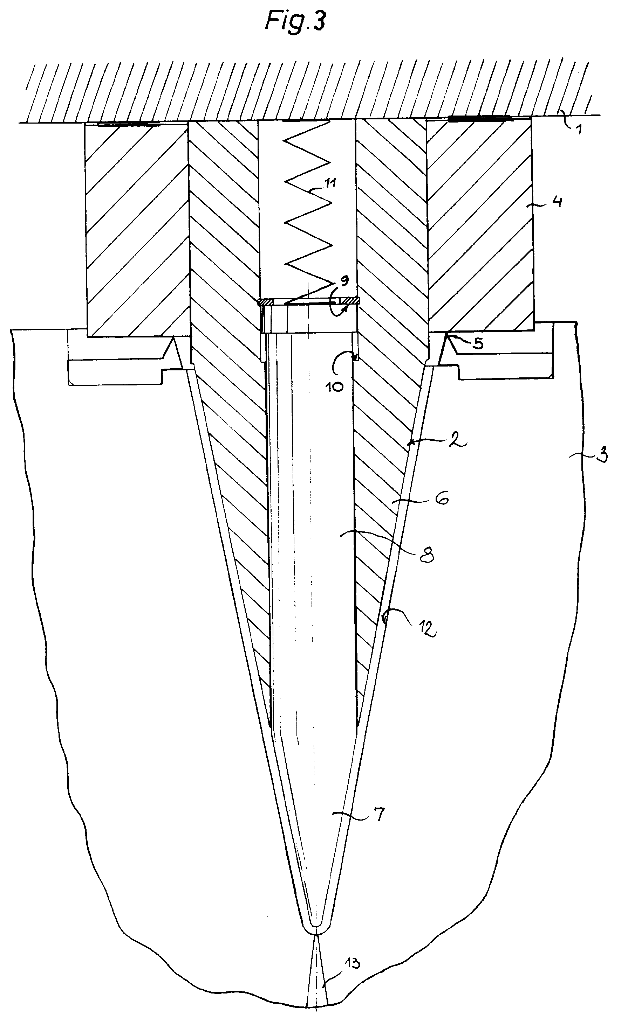

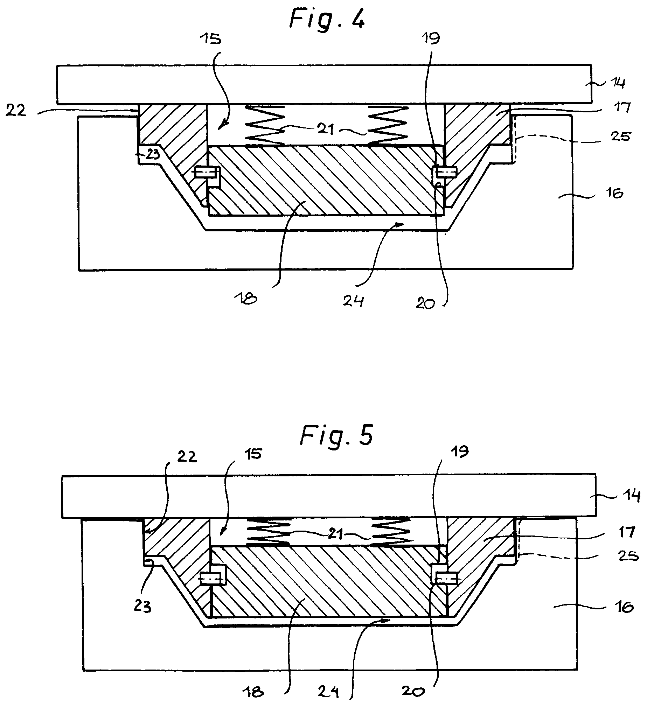

Ein Ausführungsbeispiel des Erfindungsgegenstandes ist in den Zeichnungen dargestellt. Fig. 1 zeigt einen Querschnitt eines kegelförmigen Formkernes an einer Formplatte sowie die eine Hälfte eines zweiteiligen Form-Unterteiles für eine Eistüte, wobei die Form - wie etwa zu Beginn der Vorbackphase - noch offen und ein Stirnteil des Formkernes zur Gänze ausgeschoben ist, Fig. 2 die Form nach Fig. 1 bereits geschlossen, mit abgesenkter Formplatte und teilweise eingeschobenem Stirnteil, Fig. 3 die Form nach Fig. 1 am Ende der Fertigbackphase bei vollständig eingeschobenem Stirnteil, Fig. 4 einen Querschnitt einer Form für einen Teller aus Backmasse auf Stärkebasis bei ausgeschobenem Stirnteil und Fig. 5 die Form bei eingeschobenem Stirnteil.

Eine mehrteilige Backform zur Herstellung einer Eistüte aus Waffelteig umfaßt nach Fig. 1 bis 3 eine Formplatte 1, auf der ein Formkern 2 starr befestigt ist. Dem Formkern 2 gegenüber liegt ein Form-Unterteil 3, der selbst zweiteilig ausgebildet ist. Die Fig. 1 bis 3 zeigen jeweils die eine Hälfte des geöffneten Form-Unterteiles 3. Der Formkern 2 ist nächst der Formplatte 1 von einem Ringkörper 4 umgeben, der federnd an der Formplatte 1 abgestützt ist und sich beim Schließen der Form, also beim Absenken der Formplatte 1, gegen den Form-Unterteil 3 an eine Dichtkante 5 des Form-Unterteiles 3 anlegt. Je nach Gestalt des Formköpers kann der Ring auch von der Kreisform abweichen und dem Umriß des Formkörpers folgen. Dampfauslässe im Ringkörper 4 bzw. in der Dichtkante 5 können vorhanden sein, sind jedoch hier nicht dargestellt. Im Form-Unterteil 3 ist eine Ausnehmung 12 vorgesehen, die an ihrer tiefsten Stelle durch einen sich erweiternden Dampfauslaß 13 entlüftet wird.

Der Formkern 2 selbst wird von einem konischen Führungsteil 6 und einem konischen Stirnteil 7 gebildet. Die äußeren Mantelflächen der beiden Teile 6 und 7 sind Kegelmantelflächen. An den Stirnteil 7 schließt ein Schaft 8 an, der im Inneren des Führungsteiles 6 verschiebbar gelagert ist. Zwei Anschläge 9, 10, nämlich ein Sprengring und ein Absatz, begrenzen den Verschiebungsweg des Schaftes 8 und damit des Stirnteiles 7 des Formkernes 2. Eine Feder 11 schiebt den Schaft 8 mit dem Stirnteil 7 in die in Fig. 1 dargestellte Position.

Das Verfahren zur Herstellung einer eßbaren Eistüte beginnt mit dem Befüllen der geöffneten Form. Formplatte 1 und Formkern 2 sind so weit gegenüber dem Form-Unterteil 3 angehoben, daß Teig- bzw. Backmasse in die Ausnehmung 12 des Formunterteiles 3 eingebracht werden kann. Diese Teig- bzw. Backmasse füllt den Form-Unterteil beispielsweise bis etwa zur halben Höhe der Ausnehmung 12.

Daraufhin bewegt sich die Formplatte 1 mit dem Formkern 2 bei vollständig ausgeschobenem Stirnteil 7 gegen den Form-Unterteil 3 bis der Formkern 2 in die Teig- bzw. Backmasse eintaucht und diese verdrängt. Dieser Vorgang wird mehrfach mit immer größerer Eintauchtiefe des Formkernes 2 in die Ausnehmung 12 wiederholt ("Wippen"). Dieses Wippen erfolgt während eines Zeitraumes von 15 bis 45 Sekunden (z.B. 30 Sekunden), bei einer Position des Ringes 4 gemäß Fig. 1 mit einem Abstand zur Dichtkante 5, sodaß sich ein ringförmiger Belüftungsspalt für den Dampfaustritt ergibt. Die Fig. 1 zeigt die Form in einer Position am Ende der Wipp-Phase bzw. zu Beginn des anschließenden Vorbackens. Bei Herstellung anderer Formkörper, z.B. eines Tellers oder eines anderen niedrigen Behälters mit einer relativ großen ebenen Bodenfläche, kann das Wippen entfallen.

Die Vorbackphase erfolgt bei vergrößerter Wandstärke und bei vorzugsweise zur Gänze ausgeschobenem Stirnteil 7 während einer Zeitdauer von 20 bis 100 Sekunden (z.B. für 50 Sekunden). Die Wandstärke beträgt im oberen Bereich des Formkernes 2 z.B. 3,6 mm und im Bereich des ausgeschobenen Stirnteiles 7 nur 2,6 mm. Dampf entweicht in erster Linie durch den Ringspalt zwischen dem Ring 4 und der Dichtkante 5 und durch den Dampfauslaß 13. Letzterer kann konisch oder pyramidenförmig ausgebildet sein.

Die Form wird dann geschlossen. Fig. 2 zeigt eine Zwischenstellung und Fig. 3 die Endstellung, in der das Fertigbacken für 90 bis 120 Sekunden (z.B. 105 Sekunden) erfolgt. Langsam oder schlagartig wird während des Fertigbackens die endgültige Wandstärke von überall z.B. 2 mm eingestellt. Der Stirnteil 7 weicht infolge zunehmender Strukturstabilität des Backerzeugnisses über Fig. 2 in die mit dem Formkern 2 fluchtende Stellung nach Fig. 3 zurück. Der Ring 4 liegt dabei satt auf der Dichtkante 5 auf. Nur der untere Dampfauslaß 13 in der Trennebene der beiden Form-Unterhälften 3 bleibt offen. Der Schaft 8 liegt dabei am Anschlag 9 an. Bei geschlossener Form wird das Backerzeugnis somit komprimiert, bis die gleichmäßige Wandstärke von im wesentlichen 2 mm erreicht ist. Restdampf kann auch zwischen Formkern 2 und Schaft 8 des Stirnteiles 7 entweichen. Weitere Dampfschlitze können entfallen. Dieses Verfahren stellt sicher, daß das Fertigprodukt homogene Festigkeitseigenschaften, gleichmäßige Färbung und eine Oberflächenstruktur aufweist, die einer Feuchtigkeitseinwirkung in hohem Maße widersteht.

Beim Entformen fährt die Formplatte 1 hoch. Die fertige Eistüte wird durch den gefederten Ring 4 und den Stirnteil 7 in dem Form-Unterteil 3 zurückgehalten. Sie wird von dem hochfahrenden Formkern 2 nicht mitgenommen. Sodann werden die beiden Hälften des Form-Unterteiles 3 getrennt und die Eistüte fällt heraus bzw. wird entnommen.

Die Backzeiten in der ersten Phase (Fig. 1 - Vorbackphase) richten sich nach dem Backerzeugnis und der Teigmischung, die zum Einsatz kommt. Sie kann 20 bis 100 Sekunden betragen. Das Ausbacken (Fig. 3) erfordert bis zu 120 Sekunden. Durch das Verdichten (Fig. 2 - Fig. 3) wird eine geschlossenere und feinere Struktur erreicht, wodurch das Produkt gegen Feuchtigkeit weniger empfindlich ist, als ein in einem Zug unmittelbar durchgebackenes Erzeugnis. Aussehen und Festigkeit sind weitgehend homogen.

Gemäß Fig. 4 und 5 ist auf einer Formplatte 14 ein Formkern 15 angeordnet, dem ein zweiteiliger Form-Unterteil 16 gegenüberliegt. Der Formkern 15 besteht aus einem Führungsteil 17, der in seinen Wandbereichen schräge Flächen aufweist und somit teilweise konisch oder pyramidenförmig ausgebildet ist - sowie aus einem Stirnteil 18, der durch Anschläge 19, 20 begrenzt, unter der Kraft der Federn 21 aus dem Führungsteil 17 ausschiebbar bzw. gegen die Kraft der Federn 21 einschiebbar ist. Ein zylindrischer Kernbereich 22, der nicht zwingend kreiszylindrisch sein muß, schließt dichtend an eine entsprechende Fläche 23 der Ausnehmung 24 im Form-Unterteil 16 an. Dampfschlitze 25 sind in der Fläche 23 vorgesehen. Die Ausnehmung 24 folgt der Außenfläche des Formkernes 15.

Die Querschnitte nach Fig. 4 und 5 können rotationssymmetrisch sein, sodaß mit einer solchen Form ein kreisrunder Teller herstellbar ist. Die Querschnitte nach Fig. 4 und 5 können aber auch zu einer im Grundriß quadratischen oder rechteckigen Tasse gehören. Somit können die Schrägflächen des Kernes 15 und der Ausnehmung 24 als Kegelflächen (Teller) oder als Pyramidenflächen oder -ebenen (rechteckige Tasse) aufgefaßt werden.

In jedem Fall findet ein Vorbacken in einer Stellung des Stirnteiles 18 nach Fig. 4 statt. Der ausgeschobene Stirnteil 18 reduziert die Wandstärke im Bodenbereich und paßt diese der Wandstärke der schrägen Seitenwände an. Es ergibt sich auch bei einem Vorbacken bei vergrößerter Wandstärke (Fig. 4) eine im Bereich des Bodens und der Seitenwände etwa gleiche Wandstärke, sodaß auch das Zwischenprodukt homogene Eigenschaften aufweist und ideale Voraussetzungen für das Fertigbacken gemäß Fig. 5 bei endgültiger Wandstärke schafft.

Nach dem Vorbacken ist die Strukturfestigkeit der Backmasse auf Stärkebasis so groß, daß beim Komprimieren des Zwischenproduktes auf die endgültige Wandstärke nach Fig. 5 der Stirnteil 18 zurückgedrängt wird. Die Kraft der Federn 21 ist jedenfalls geringer als die Strukturfestigkeit der vorgebackenen Backmasse. Wenn die Federkraft auch geringer als der Dampfdruck ist, der auf den Stirnteil 18 wirkt, dann wird der Stirnteil 18 bereits vor dem Verdichten auf die Wandstärke nach Fig. 5 zurückgeschoben. Die vorgebackene Backmasse dehnt sich im Bodenbereich kurzzeitig aus um dann in die Endform nach Fig. 5 komprimiert zu werden.

Unter einer mehrteiligen Backform wird im Sinne der Erfindung auch eine zweiteilige, hier vorzugsweise eine dreiteilige Backform verstanden, wobei die Formteile durch Teilungsflächen voneinander trennbar sind.

Das mit der Backform bzw. dem Verfahren herstellbare Produkt, hier zusammenfassend kurz mit "Tüte, insbesondere Eistüte, Becher oder Teller" bezeichnet, umfaßt auch Fast-Food-Verpackungen, Tabletts, Trays, auch als Bonbonniereeinlagen, sowie ähnliche Verpackungsgebinde und Behälter. Die Teig-bzw. Backmasse wird nach dem endgültigen Verwendungszweck (z.B. eßbar oder bloß biologisch abbaubar) unterschiedlich zusammengestellt und kann daher Mehl, Stärke, pflanzliche Mahlprodukte, sowie organische und anorganische Zuschlagstoffe (z.B. Steinmehl) enthalten. Der Formkern 2, 15 kann einen oder mehrere auch teleskopartig ausfahrbare Stirnteile 7 bzw. 18 besitzen.

Der Stirnteil 7, 18 kann ferner in einer Bohrung oder Ausnehmung des Formkernes 2, 15 bzw. des Führungsteiles 6, 17 verschiebbar gelagert sein, der außermittig liegt. Der Stirnteil kann den Führungssteil auch hülsenartig umgreifen, sodaß der Stirnteil auf dem Führungsteil verschiebbar ist.

## Patentansprüche

1. Mehrteilige Backform zur Herstellung einer eßbaren Tüte, insbesondere Eistüte oder eines Bechers oder Tellers oder dergleichen aus einer Waffelteigmasse oder einer Teig-bzw. Backmasse auf Stärkebasis mit einem aus vorzugsweise zwei Hälften bestehenden Form-Unterteil (3, 16) mit einer wenigstens teilweise konischen oder pyramidenstumpfförmigen Ausnehmung (12, 24) entsprechend der Außenkontur der Tüte, insbesondere Eistüte, des Bechers oder Tellers und mit einem an einer Formplatte vorgesehenen, in die Ausnehmung des Form-Unterteiles einführbaren wenigstens teilweise konischen oder pyramidenstumpfförmigen Formkern (2, 15), entsprechend der Innenkontur der Tüte, insbesondere Eistüte, des Bechers oder Tellers, **dadurch gekennzeichnet**, daß der Formkern (2, 15) mindestens einen Stirnteil (7, 18) umfaßt, der aus einem Führungsteil (6, 17) des Formkernes (2, 15) zur Veränderung der Wandstärke im Spitzen- bzw. Bodenbereich während des Back- oder Trocknungsvorganges teleskopartig ausschiebbar und einschiebbar ist.

2. Mehrteilige Backform nach Anspruch 1, **dadurch gekennzeichnet**, daß an den Stirnteil (7, 18) des Formkernes (2, 15) ein Schaft (8) anschließt, der in einer insbesondere zentralen Bohrung oder Ausnehmung des Führungsteiles (6, 17) des Formkernes (2, 15) verschiebbar gelagert ist.

3. Mehrteilige Backform nach den Ansprüchen 1 oder 2, **dadurch gekennzeichnet**, daß der Formkern (2) quer zu seiner Mittelachse zweigeteilt ist und einen konischen Stirnteil (7), beispielsweise mit der konischen Spitze der Eistüte, umfaßt, daß der konische Stirnteil (7) aus einem an seiner Mantelfläche konischen Führungsteil (6) ausschiebbar ist und daß an den konischen Stirnteil (7) der Schaft (8) anschließt, der in einer zentralen Bohrung oder Ausnehmung des Führungsteiles (6) verschiebbar gelagert ist.

4. Mehrteilige Backform nach den Ansprüchen 2 oder 3, **dadurch gekennzeichnet**, daß der Schaft (8) im Anschluß an den Stirnteil (7) bzw. der Stirnteil (18) selbst zwischen zwei Anschlägen (9, 10 bzw. 19, 20) verschiebbar ist, wobei der eine Anschlag (9, 20) das Einschieben des Stirnteiles (7, 18) gegen die Kraft einer Feder (11, 21) in der Position begrenzt, in welcher die Außenfläche des Stirnteiles (7) mit der Mantelfläche des Führungsteiles (6) etwa fluchtet und bzw. oder der Stirnteil (7, 18) in den Führungsteil (6, 17) zurückgeschoben ist, und der andere Anschlag (10, 19) eine unter Federkraft über die fluchtende Lage der genannten Flächen des Führungsteiles (6) vortretenden Lage des Stirnteiles (7, 18) begrenzt.

5. Mehrteilige Backform nach Anspruch 4, **dadurch gekennzeichnet**, daß die Kraft der den Stirnteil (7, 18) in der ausgeschobenen Stellung vorspannenden Feder (11, 21) geringer ist, als die Strukturfestigkeit der Teig- bzw. Backmasse im gebackenenen bzw. vorgebackenen Zustand, jedoch aber größer ist als der Dampfdruck der Teig- bzw. Backmasse, der auf den Stirnteil (7, 18) wirkt.

6. Mehrteilige Backform nach Anspruch 4, **dadurch gekennzeichnet**, daß die Kraft der den Stirnteil (7, 18) in der ausgeschobenen Stellung vorspannenden Feder (11, 21) geringer ist, als die Strukturfestigkeit der Teig- bzw. Backmasse im gebackenen bzw. vorgebackenen Zustand und auch geringer ist, als der Dampfdruck der Teig- bzw. Backmasse, der auf den Stirnteil (7, 18) wirkt.

7. Mehrteilige Backform nach einem der Ansprüche 1 bis 6, **dadurch gekennzeichnet**, daß die Ausnehmung (12) im Form-Unterteil (3) etwa an ihrer tiefsten Stelle mindestens einen Dampfauslaß (13) aufweist.

8. Verfahren zur Herstellung einer eßbaren Tüte, insbesondere Eistüte oder eines Bechers oder Tellers oder dergleichen aus Waffelteigmasse oder einer Teig- bzw. Backmasse auf Stärkebasis, mit einer mehrteiligen Backform nach einem der Ansprüche 1 bis 7, **dadurch gekennzeichnet**, daß die Teig- bzw. Backmasse in den Form-Unterteil eingebracht, durch intermittierendes Ein- und Ausfahren des Formkernes vorverteilt und vorverdichtet und bei der eineinhalb bis dreifachen Wandstärke der Tüte, Eistüte, des Bechers oder Tellers bei aus dem Führungsteil ausgeschobenen Stirnteil bis zum Erreichen der Strukturstabilität vorgebacken wird und daß dann der Formkern bis zur endgültigen Wandstärke der Eistüte des Bechers oder Tellers in den Form-Unterteil eingeschoben und der Stirnteil in die eingezogene Stellung zurückgeschoben wird, in der seine Mantelfläche mit jener des Führungsteiles etwa fluchtet und sodann das Fertigbacken erfolgt.

## Claims

1. Multi-part baking mould for producing an edible cornet, in particular ice-cream cornet, or a tub or plate or the like from a wafer mixture or a dough or baking mixture based on starch, having a bottom mould part (3, 16) which preferably comprises two halves and has a cavity (12, 24) which is at least partially conical or in the form of a truncated pyramid in accordance with the outer contour of the cornet, in particular ice-cream cornet, of the tub or plate, and having a mould core (2, 15) which is provided on a mould plate, can be introduced into the cavity of the bottom mould part and is at least partially conical or in the form of a truncated pyramid, in accordance with the inner contour of the cornet, in particular ice-cream cornet, of the tub or plate, characterized in that the mould core (2, 15) comprises at least one end part (7, 18) which can be telescopically pushed out of a guide part (6, 17) of the mould core (2, 15), and into the same, in order to change the wall thickness in the region of the tip or base during the baking or drying operation.

2. Multi-part baking mould according to Claim 1, characterized in that the end part (7, 18) of the mould core (2, 15) is adjoined by a shank (8) which is mounted displaceably in an, in particular, central bore or cavity of the guide part (6, 17) of the mould core (2, 15).

3. Multi-part baking mould according to Claim 1 or 2, characterized in that the mould core (2) is divided in two transversely to its centre axis and comprises a conical end part (7), for example with the conical tip of the ice-cream cornet, in that the conical end part (7) can be pushed out of a guide part (6), which has a conical lateral surface, and in that the conical end part (7) is adjoined by the shank (8), which is mounted displaceably in a central bore or cavity of the guide part (6).

4. Multi-part baking mould according to Claim 2 or 3, characterized in that the shank (8), adjoining the end part (7), or the end part (18) itself can be displaced between two stops (9, 10 or 19, 20, respectively), it being the case that one stop (9, 20) limits the action of the end part (7, 18) being pushed in counter to the force of a spring (11, 21) in the position in which the outer surface of the end part (7) is approximately aligned with the lateral surface of the guide part (6) and/or the end part (7, 18) has been pushed back into the guide part (6, 17), and the other stop (10, 19) limits a position of the end part (7, 18) in which the latter advances, under spring force, beyond the aligned position of said surfaces of the guide part (6).

5. Multi-part baking mould according to Claim 4, characterized in that the force of the spring (11, 21), which prestresses the end part (7, 18) in the pushed-out position, is smaller than the structural strength of the dough or baking mixture in the baked or pre-baked state, but is greater than the steam pressure, of the dough or baking mixture, which acts on the end part (7, 18).

6. Multi-part baking mould according to Claim 4, characterized in that the force of the spring (11, 21), which prestresses the end part (7, 18) in the pushed-out position, is smaller than the structural strength of the dough or baking mixture in the baked or pre-baked state, and is also smaller than the steam pressure, of the dough or baking mixture, which acts on the end part (7, 18).

7. Multi-part baking mould according to any one of Claims 1 to 6, characterized in that the cavity (12) in the bottom mould part (3) has at least one steam outlet (13) approximately at its lowest point.

8. Process for producing an edible cornet, in particular ice-cream cornet, or a tub or plate or the like from wafer mixture or a dough or baking mixture based on starch, having a multi-part baking mould according to one of Claims 1 to 7, characterized in that the dough or baking mixture is introduced into the bottom mould part, is pre-distributed and pre-compressed by the mould core being retracted and extended intermittently, and, with one and a half to three times the wall thickness of the cornet, ice-cream cornet, of the tub or plate, is pre-baked with the end part pushed out of the guide part, until the structural stability is achieved, and in that the mould core is then pushed into the bottom mould part to the definitive wall thickness of the ice-cream cornet, of the tub or plate, and the end part is pushed back into the drawn-in position, in which its lateral surface is approximately aligned with that of the guide part, and baking is then completed.

## Revendications

1. Moule de cuisson à plusieurs parties destiné à la fabrication d'un cornet comestible, en particulier d'un cornet à glace, ou d'un pot, ou d'une assiette ou similaire à partir d'une masse de pâte à gaufrette, de pâte alimentaire ou de pâte non alimentaire à base d'amidon, comprenant une partie inférieure de moule (3,16) constituée de préférence de deux moitiés avec un évidement (12, 24) au moins partiellement conique ou tronconique correspondant au pourtour extérieur du cornet, en particulier du cornet à glace, du pot ou de l'assiette et avec un noyau de moule (2, 15) au moins partiellement conique ou tronconique, correspondant au pourtour intérieur du cornet, en particulier du cornet à glace, du pot ou de l'assiette, prévu sur une plaque du moule, apte à être introduit dans l'évidement de la partie inférieure du moule, caractérisé en ce que le noyau de moule (2, 15) comporte au moins une partie frontale (7, 18) qui peut être introduite dans et retirée d'une partie de guidage (6, 17) du noyau de moule (2, 15) par coulissement et de façon télescopique, pour modifier l'épaisseur de paroi dans la zone de la pointe ou du fond pendant l'opération de cuisson ou de séchage.

2. Moule de cuisson à plusieurs parties selon la revendication 1, caractérisé en ce que sur la partie frontale (7, 18) du noyau de moule (2, 15) est raccordée une tige (8) qui est montée coulissante dans un perçage ou un évidement en particulier central de la partie de guidage (6, 17) du noyau de moule (2, 15).

3. Moule de cuisson à plusieurs parties selon les revendications 1 ou 2, caractérisé en ce que le noyau de moule (2) est divisé en deux transversalement à son axe médian et comprend une partie frontale conique (7), par exemple avec la pointe conique du cornet à glace, en ce que la partie frontale conique (7) peut être retirée par coulissement d'une partie de guidage conique (6) sur sa surface d'enveloppe et en ce que la tige (8) se raccorde sur la partie frontale conique (7), laquelle tige est montée coulissante dans un perçage ou un évidement central de la pièce de guidage (6).

4. Moule de cuisson à plusieurs parties selon les revendications 2 ou 3, caractérisé en ce qu'au niveau du raccordement à la partie frontale (7), la tige (8), ou la partie frontale (18) elle-même, est coulissante entre deux butées (9, 10 respectivement 19, 20), l'une des butées (9, 20) limitant le coulissement de la partie frontale (7, 18) contre la force d'un ressort (11, 21) dans la position dans laquelle la surface extérieure de la partie frontale (7) est sensiblement alignée sur la surface de l'enveloppe de la pièce de guidage (6) et/ou la partie frontale (7, 18) est ramenée par coulissement dans la pièce de guidage (6, 17), et l'autre butée (10, 19) limite une position de la partie frontale (7, 18) avançant, sous la force du ressort, sur la position alignée des surfaces mentionnées de la pièce de guidage (6).

5. Moule de cuisson à plusieurs parties selon la revendication 4, caractérisé en ce que la force du ressort (11, 21) maintenant la partie frontale (7, 18) dans la position retirée par coulissement est plus faible que la résistance mécanique de la structure de la pâte alimentaire ou non alimentaire, à l'état cuit ou précuit, mais plus forte que la pression de la vapeur de la pâte alimentaire ou non alimentaire qui s'exerce sur la partie frontale (7, 18).

6. Moule de cuisson à plusieurs parties selon la revendication 4, caractérisé en ce que la force du ressort (11, 21) maintenant la partie frontale (7, 18) dans la position retirée par coulissement est plus faible que la résistance mécanique de la structure de la pâte alimentaire ou non alimentaire, à l'état cuit ou précuit, et est aussi plus faible que la pression de la vapeur de la pâte alimentaire ou non alimentaire, qui s'exerce sur la partie frontale (7, 18).

7. Moule de cuisson à plusieurs parties selon l'une des revendications 1 à 6, caractérisé en ce que l'évidement (12) dans la partie inférieure du moule (3) présente sensiblement en son point le plus profond au moins une évacuation de vapeur (13).

8. Procédé pour la fabrication d'un cornet comestible, en particulier d'un cornet à glace, ou d'un pot, ou d'une assiette ou similaire en pâte à gaufrette, en pâte alimentaire ou en pâte non alimentaire à base d'amidon, avec un moule de cuisson à plusieurs parties selon l'une des revendications 1 à 7, caractérisé en ce que la pâte alimentaire ou la pâte non alimentaire est placée dans la partie inférieure du moule, est pré-répartie et pré-compactée par introduction et retrait par intermittence du noyau de moule et, lorsqu'elle atteint une fois et demie à trois fois l'épaisseur de paroi du cornet, du cornet à glace, du pot ou de l'assiette, la pièce frontale étant retirée par coulissement de la pièce de guidage, la pâte est précuite jusqu'à obtention de la stabilité de la structure, et en ce que le noyau du moule est ensuite introduit par coulissement dans la partie inférieure du moule jusqu'à l'épaisseur de paroi définitive du cornet de glace, du pot ou de l'assiette, et la partie frontale est ramenée par coulissement dans la position rétractée, dans laquelle sa surface d'enveloppe est sensiblement alignée avec celle de la pièce de guidage, et la fin de la cuisson intervient alors.
